# EUROPÄISCHE PATENTSCHRIFT

(11) **EP 2 697 587 B1**
(45) Veröffentlichungstag und Bekanntmachung des Hinweises auf die Patenterteilung: **18.02.2015**
(21) Anmeldenummer: 12711347.0
(22) Anmeldetag: 27.03.2012
(51) Int. Cl.: F27B 3/22, F27D 13/00, F27D 17/00, C21C 5/52

(54) **VERFAHREN ZUM BETRIEB EINES ELEKTROLICHTBOGENOFENS**
METHOD FOR OPERATING AN ELECTRIC ARC FURNACE
PROCÉDÉ POUR FAIRE FONCTIONNER UN FOUR À ARC ÉLECTRIQUE

(30) Priorität: 13.04.2011 DE 102011016943
(43) Veröffentlichungstag der Anmeldung: 19.02.2014
(73) Patentinhaber: Georgsmarienhütte GmbH, 49124 Georgsmarienhütte (DE)
(72) Erfinder: LEHMKUHL, Andreas, 49124 Georgsmarienhütte (DE); JANSEN, Tobias, 24558 Henstedt Ulzburg (DE); DETTMER, Bernd, 49186 Bad Iburg (DE)
(74) Vertreter: Weeg, Thomas
(86) Internationale Anmeldenummer: PCT/EP2012/001331
(87) Internationale Veröffentlichungsnummer: WO 2012/139708

(56) Entgegenhaltungen:
- EP-A1- 0 834 049
- DE-A1- 2 541 086

## Beschreibung

Die Erfindung betrifft ein Verfahren zum Betrieb eines Elektrolichtbogenofens, bei dem sich in einem Bodengefäß befindliches schmelzflüssiges Material, insbesondere Stahl, mit mindestens einem Lichtbogen erhitzt wird, wobei auf dem Bodengefäß ein Deckel angeordnet ist, wobei an zumindest einer Stelle des Elektrolichtbogenofens eine Austrittsöffnung angeordnet ist, von der aus Ofenabgase aus dem Ofeninneren heraus geleitet und einer Entstaubungsanlage zugeführt werden und wobei zur Nachverbrennung ein sauerstoffhaltiges Gas in das Ofeninnere eingeleitet wird.

Elektrolichtbogenöfen dieser Art sowie Verfahren zu deren Betrieb sind im Stand der Technik hinlänglich bekannt. Der Lichtbogenofen kann als Gleichstromofen mit einer Schmelzeelektrode und einer Bodenelektrode oder als Wechselstromofen mit drei Schmelzeelektroden ausgeführt sein. Zur Einhaltung einer definierten Lichtbogenlänge dient ein Elektrodenregler. Das Ofengefäß umfasst ein gemauertes oder gestampftes Bodengefäß aus Feuerfestmaterial, sowie ein mit Kühlelementen versehenes Obergefäß und einen schwenkbaren Deckel. Im Obergefäß sind häufig Hilfsbrenner (Betrieb mit Erdgas und Sauerstoff) vorgesehen. Bei aufgeschwenktem Deckel können Schrott und Zusatzstoffe in den Ofen chargiert werden. Der Abstich des geschmolzenen Stahls erfolgt in eine Pfanne. Die Schlacke kann in einen Schlackenkübel abgelassen werden.

Beim Betrieb des Lichtbogenofens sind verschiedene Problemkreise zu beachten, um eine qualitativ hochwertige Stahlverarbeitung sicherzustellen sowie eine kostengünstige Produktion zu ermöglichen.

Ein hierbei relevantes Thema ist eine gezielte Nachverbrennung unter Einsatz von sauerstoffhaltigem Gas bzw. Sauerstoff, womit die Schrottschüttung vorgewärmt bzw. geschmolzen werden kann. Dabei ist es bekannt, zur Nachverbrennung an geeigneten Stellen des Ofens das sauerstoffhaltige Gas in das Ofeninnere einzuleiten.

Die EP 0 834 049 B1 offenbart hierzu, sauerstoffhaltiges Gas mit hoher Geschwindigkeit und so in das Ofeninnere einzudüsen, dass sich das Gas in Rotation befindet. Hierbei werden relativ hohe Düsenaustrittsgeschwindigkeiten zwischen 50 m/s und 125 m/s angestrebt.

In der DE 25 41 086 A1 wird Luft unkontrolliert ins Innere eines Elektrolichtbogenofens eingesaugt. Im Ofeninneren selbst wird hierzu ein Unterdruck aufrecht erhalten.

Es hat sich erwiesen, dass der Nachverbrennungseffekt insbesondere unter dem Gesichtspunkt der Vorwärmung bzw. der Aufschmelzung des Schrotts noch nicht optimal ist.

Der Erfindung liegt daher die Aufgabe zugrunde, ein Verfahren der eingangs genannten Art so fortzubilden, dass eine verbesserte Nachverbrennung im Ofen erreicht wird. Dabei soll eine optimale Nutzung des eingebrachten Gases erreicht werden.

Die **Lösung** dieser Aufgabe durch die Erfindung ist dadurch gekennzeichnet, dass die Einleitung des sauerstoffhaltigen Gases an einer Eintrittsöffnung erfolgt, die von der Austrittsöffnung beabstandet ist, wobei das sauerstoffhaltige Gas mittels mindestens eines Eingabeelements in das Ofeninnere einströmen gelassen wird, wobei das mindestens eine Eingabeelement radial ausgerichtet in der Wandung des Bodengefäßes angeordnet ist oder wobei das mindestens eine Eingabeelement zur Ofenmitte hin ausgerichtet in der Wandung des Bodengefäßes angeordnet ist, wobei die Austrittsrichtung des Eingabeelements zur Horizontalen einen Winkel zwischen 5° und 15° nach unten einschließt, wobei das sauerstoffhaltige Gas so über das mindestens eine Eingabeelement in das Ofeninnere einströmen gelassen wird, dass es eine Ausströmgeschwindigkeit von weniger als 5 m/s aufweist, wobei das sauerstoffhaltige Gas über eine Zuleitung dem mindestens einen Eingabeelement zugeführt wird und das Gas in der Zuleitung unmittelbar vor dem Erreichen des Eingabeelements einen Überdruck gegenüber dem Druck im Elektrolichtbogenofen von maximal 0,5 bar, vorzugsweise von maximal 0,25 bar, aufweist.

Die Austrittsöffnung ist zumeist im Deckel angeordnet, wobei das Bodengefäß und der Deckel eine im wesentlichen runde Grundform haben können und wobei sich die Austrittsöffnung und die Eintrittsöffnung bevorzugt diagonal gegenüberliegen. Besonders bevorzugt ist vorgesehen, dass neben der Eingabe von sauerstoffhaltigem Gas an der diagonal von der Austrittsöffnung angeordneten Eintrittsöffnung keine Eingabe von sauerstoffhaltigem Gas mit einer Geschwindigkeit über 5 m/s erfolgt; es erfolgt also keine Eingabe von sauerstoffhaltigem Gas mit hoher Geschwindigkeit (Jet-Funktion der Brenner).

Das Bodengefäß ist bevorzugt zur Aufnahme von schmelzflüssigem Material bis zu einer maximalen Pegelhöhe ausgebildet, wobei die Eintrittsöffnung möglichst tief, aber ohne die Gefahr, mit flüssigem oder teigigem Material zu verstopften, angeordnet ist. Besonders bevorzugt liegt die Eintrittsöffnung in einem Bereich zwischen 20 und 150 cm oberhalb der maximalen Pegelhöhe.

Das sauerstoffhaltige Gas kann auch über mehrere Eingabeelemente eingegeben werden, die parallel horizontal nebeneinander und/oder in vertikale Richtung übereinander angeordnet sind. In Abhängigkeit der Größe des Ofens kann also auch vorgesehen werden, dass die Eingabeelemente übereinander angeordnet sind. Alle Eingabeelemente können am Umfang der Wandung horizontal nebeneinander oder auch in mehreren Ebene übereinander angeordnet sein. In jedem Falle muss sichergestellt sein, dass die Eingabeelemente sich über maximal die 75 % des Ofenumfangs erstrecken, die am weitesten von der Austrittsöffnung zur Entstaubungsanlage entfernt sind. Ansonsten besteht die Gefahr, dass eingegebener Sauerstoff ungenutzt in die Abgasstrecke gesaugt wird.

Das mindestens eine Eingabeelement weist bevorzugt in seinem Austrittsendbereich eine trichterförmige Verbreiterung auf.

Mit der vorgeschlagenen Vorgehensweise wird erreicht, dass das eingegebene sauerstoffhaltige Gas, bei dem es sich auch um technisch reinen Sauerstoff handeln kann, quasi drucklos in die Schrottschüttung eingebracht ("gehaucht") wird. Die Verteilung des Gases erfolgt nicht durch eine anfänglich beim Düsenaustritt aufgegebenen Austrittsgeschwindigkeit, sondern durch den Durchzug im Ofeninneren, der durch den Abzug des Ofengases durch das Deckelloch erfolgt.

Das sauerstoffhaltige Gas wird in der zuführenden Leitung beispielsweise mit einem Werkleitungs-Druck von 14 bar zugeführt. Indes sieht die Erfindung vor, dass sich der Sauerstoff beim Verlassen des Eingabeelements im Ofeninneren sofort entspannt, d. h. im wesentlichen drucklos wird. Im Stand der Technik wird indes vorgesehen, dass über Düsen oder Injektoren ein starker Geschwindigkeitsanstieg des Gases beim Verlassen der Düse erfolgt. Es wird also letztlich angestrebt, dass der Sauerstoff so zugeführt wird, dass er möglichst zur Ruhe kommt. Die Erzeugung des Durchzuges erfolgt aufgrund der Primärentstaubung

Möglich ist eine vorteilhafte Betriebsweise, bei der im Falle dessen, dass keine Nachverbrennung gewünscht wird, durch die Eingabeelemente Pressluft geleitet wird, um die Eingabeelemente freizuhalten.

Die Eingabeelemente werden erfindungsgemäß so tief wie möglich positioniert, wobei Verbärungen an der Ofenwand entsprechend zu berücksichtigen sind (die dem Ofenbetreiber in der Regel bekannt sind). Ziel ist es dabei, dann auch bei niedrigen Ofenfüllgraden, die Nachverbrennung in der Schrottschüttung stattfinden zu lassen. Eine Möglichkeit ist es auch, die Eingabeelemente, die als Diffusoren wirken, oberhalb von Brennern anzuordnen, weil dort im Normalfall keine Anbackungen sind.

Die Primärentstaubung zieht die Rauchgase an. Damit wird dann auch der Nachverbrennungs-Sauerstoff mit dem vorhandenen Kohlenmonoxid und dem Wasserstoff in Verbindung und damit zur Reaktion gebracht.

In der Zeichnung ist ein Ausführungsbeispiel der Erfindung dargestellt. Es zeigen:
- Fig. 1: schematisch die Seitenansicht eines Elektrolichtbogenofens im Schnitt,
- Fig. 2: schematisch die Draufsicht auf den Elektrolichtbogenofen nach Fig. 1 und
- Fig. 3: die Einzelheit "X" gemäß Fig. 1.

In den Figuren ist ein Elektrolichtbogenofen 1 schematisch skizziert. Dieser hat ein gemauertes Bodengefäß 2, in dem schmelzflüssiges Material 3, insbesondere in Form von Stahl, aufgenommen werden kann (bedeckt von einer Schlackeschicht). Ein Deckel 5 deckt das Bodengefäß 2 ab. Drei im Deckel 5 angeordnete Elektroden 14 sind oberhalb des Pegels des schmelzflüssigen Materials 3 angeordnet. In bekannter Weise wird durch Aufbau eines Potentials zwischen Elektroden 14 und Material 3 ein Lichtbogen 4 erzeugt, der den Schmelzprozess des Materials 3 hervorruft.

An einer Stelle 6 befindet sich im Deckel 5 eine Austrittsöffnung für das Ofengas, das von hier zu einer Entstaubungsanlage 8 geleitet wird. Zur Nachverbrennung im Ofeninneren wird sauerstoffhaltiges Gas G (das auch technisch reiner Sauerstoff sein kann) in das Ofeninnere geleitet; dies erfolgt über eine Eintrittsöffnung 9.

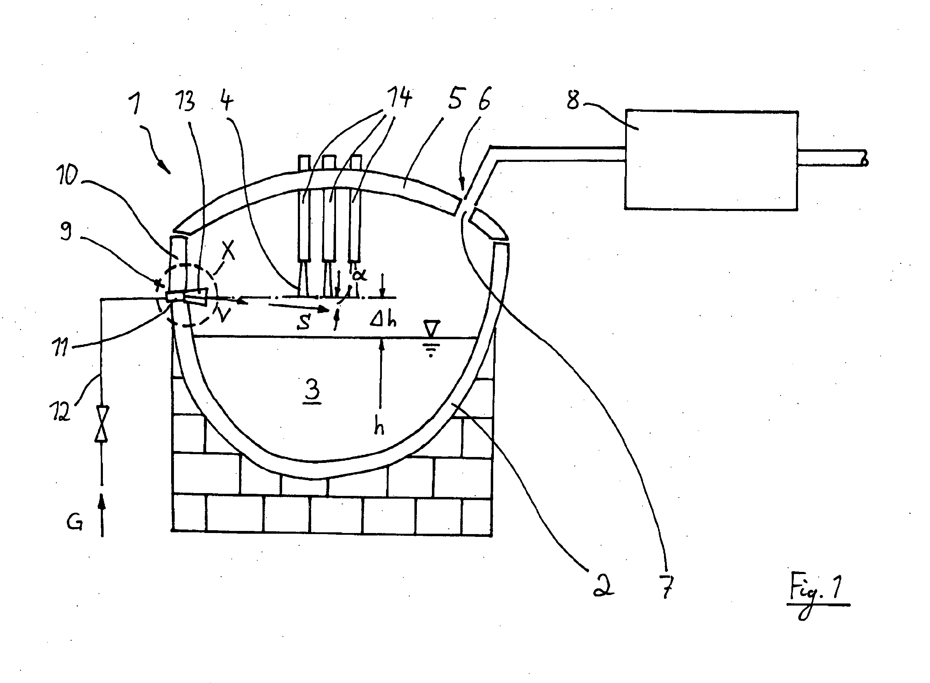

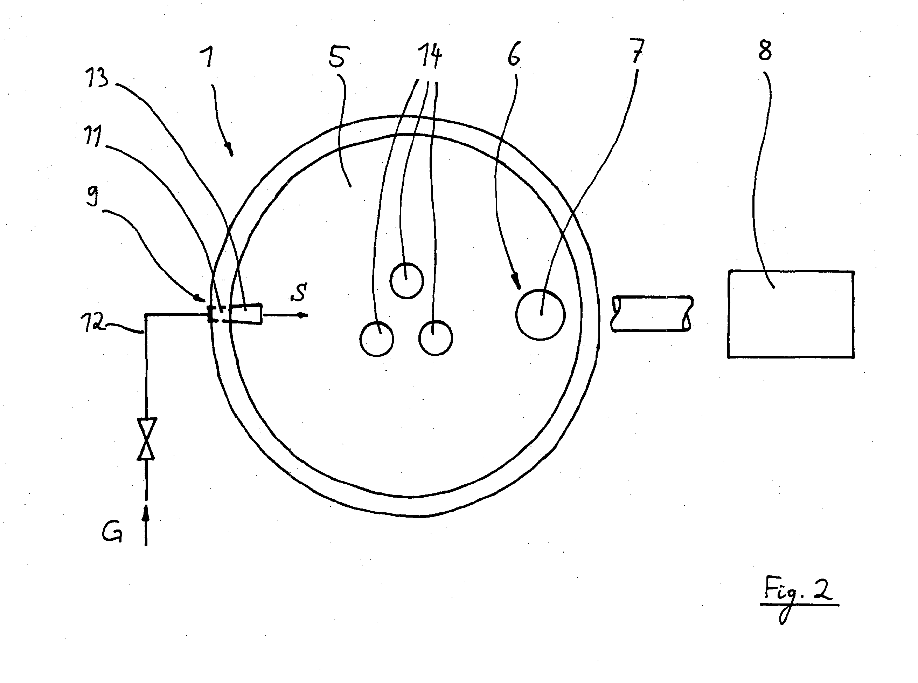

Wie in der Zusammenschau der Figuren 1 und 2 gesehen werden kann, sind dabei die Austrittsöffnung 7 und die Eintrittsöffnung 9 quasi diagonal im Ofen angeordnet, d. h. sie haben voneinander den maximal möglichen Abstand (wenn man die Austrittsöffnung 7 als gegeben voraussetzt).

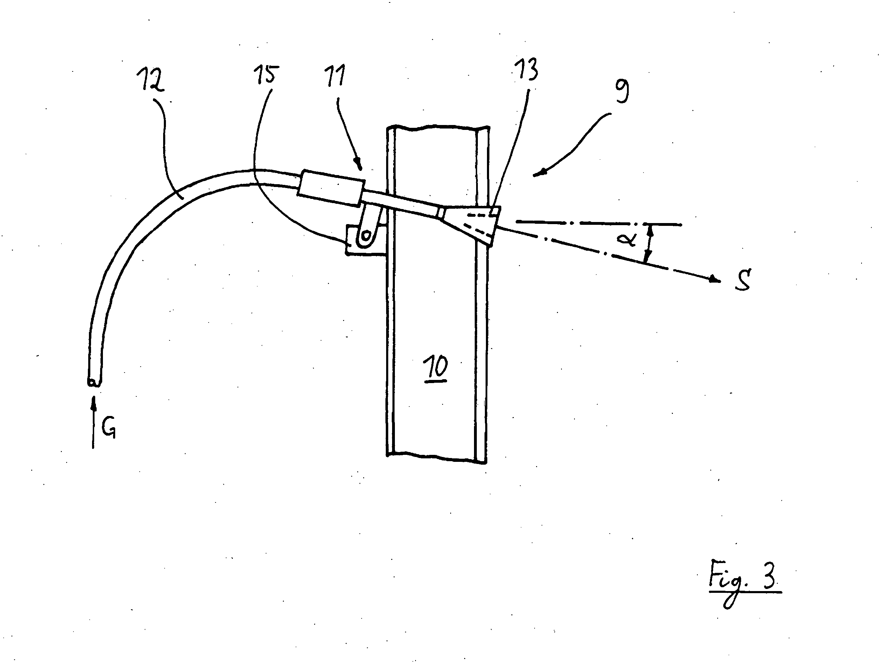

Ferner ergibt sich - was am besten aus Fig. 3 hervorgeht -, dass das sauerstoffhaltige Gas G mittels mindestens eines Eingabeelement 11 in Form eines Diffusors ins Ofeninnere gebracht wird. Der Diffusor weist - im Unterschied zu einer Gasdüse - in seinem Endbereich eine trichterförmige Verbreiterung 13 auf, so dass das austretende Gas nicht beschleunigt, sondern verlangsamt wird. Angestrebt wird nämlich, dass das Gas mit möglichst geringer Ausströmgeschwindigkeit v das Eingabeelement 11 in Austrittsrichtung S verlässt.

Das Gas soll quasi durch die Schrottschüttung gezogen werden. Hierzu ist die Austrittsrichtung S des Eingabeelements 11 zur Ofenmitte hin ausgerichtet, so dass das Gas drallfrei ins Ofeninnere eintritt. Dabei kann die Austrittsrichtung S radial ausgerichtet sein; dargestellt ist indes, dass die Austrittsrichtung S unter einem kleinen Winkel α (vorzugsweise zwischen 5° und 15°) zur Horizontalen nach unten weist.

Das mindestens eine Eingabeelement 11 ist dabei möglichst tief im Bodengefäß 2 angeordnet. In Fig. 1 ist zu sehen, dass das Bodengefäß 2 ausgelegt ist, schmelzflüssiges Material 3 bis zu einer maximalen Pegelhöhe von h aufzunehmen. Das mindestens eine Eingabeelement 11 ist in einem Höhen-Bereich Δh über h angeordnet. Diese zusätzliche Höhe Δh ist möglichst gering zu wählen und hängt vom Grad der Verbärungen ab, die zu erwarten sind.

Die Anordnung des Eingabeelements 11 in der Wandung 10 des Bodengefäßes 2 ist aus Fig. 3 ersichtlich.

Das Eingabeelement 11 wird von einer Halterung 15 getragen, die an der Wandung 10 des Bodengefäßes 2 angeschweißt ist, insbesondere an dem Außenpanel der Wandung 10.

Über die Zuleitung 12 wird das sauerstoffhaltige Gas G dem Eingabeelement 11 zugeführt. Die trichterförmige Verbreiterung 13 stellt eine geringe Ausströmgeschwindigkeit v des Gases G ins Ofeninnere sicher.

Vorteilhaft ist auch die Anordnung mehrerer baugleicher Eingabeelemente 11 horizontal nebeneinander oder zwei oder mehrreihig übereinander in unmittelbarer Nachbarschaft. Alle Eingabeelemente 11 können über eine Zuleitung 12 mit Gas G versorgt werden.

### Bezugszeichenliste:

- 1: Elektrolichtbogenofen
- 2: Bodengefäß
- 3: schmelzflüssiges Material (Stahl)
- 4: Lichtbogen
- 5: Deckel
- 6: Stelle der Austrittsöffnung
- 7: Austrittsöffnung
- 8: Entstaubungsanlage
- 9: Eintrittsöffnung
- 10: Wandung des Bodengefäßes
- 11: Eingabeelement
- 12: Zuleitung
- 13: trichterförmige Verbreiterung
- 14: Elektrode
- 15: Halterung

- G: sauerstoffhaltiges Gas
- h: maximale Pegelhöhe
- Δh: Bereich oberhalb der maximalen Pegelhöhe
- v: Ausströmgeschwindigkeit
- S: Austrittsrichtung
- α: Winkel

## Patentansprüche

1. Verfahren zum Betrieb eines Elektrolichtbogenofens (1), bei dem sich in einem Bodengefäß (2) befindliches schmelzflüssiges Material (3), insbesondere Stahl, mit mindestens einem Lichtbogen (4) erhitzt wird, wobei auf dem Bodengefäß (2) ein Deckel (5) angeordnet ist, wobei an zumindest einer Stelle (6) des Elektrolichtbogenofens (1) eine Austrittsöffnung (7) angeordnet ist, von der aus Ofenabgase aus dem Ofeninneren heraus geleitet und einer Entstaubungsanlage (8) zugeführt werden und wobei zur Nachverbrennung ein sauerstoffhaltiges Gas (G) in das Ofeninnere eingeleitet wird,
wobei die Einleitung des sauerstoffhaltigen Gases (G) an einer Eintrittsöffnung (9) erfolgt, die von der Austrittsöffnung (7) beabstandet ist, wobei das sauerstoffhaltige Gas (G) mittels mindestens eines Eingabeelements (11) in das Ofeninnere einströmen gelassen wird,
wobei das mindestens eine Eingabeelement (11) radial ausgerichtet in der Wandung (10) des Bodengefäßes (2) angeordnet ist oder wobei das mindestens eine Eingabeelement (1) zur Ofenmitte hin ausgerichtet in der Wandung (10) des Bodengefäßes (2) angeordnet ist,
wobei die Austrittsrichtung (S) des Eingabeelements (11) zur Horizontalen einen Winkel (α) zwischen 5° und 15° nach unten einschließt,
wobei das sauerstoffhaltige Gas (G) so über das mindestens eine Eingabeelement (11) in das Ofeninnere einströmen gelassen wird, dass es eine Ausströmgeschwindigkeit (v) von weniger als 5 m/s aufweist,
wobei das sauerstoffhaltige Gas (G) über eine Zuleitung (12) dem mindestens einen Eingabeelement (11) zugeführt wird und das Gas (G) in der Zuleitung (12) unmittelbar vor dem Erreichen des Eingabeelements (11) einen Überdruck gegenüber dem Druck im Elektrolicht-bogenofen (1) von maximal 0,5 bar, vorzugsweise von maximal 0,25 bar, aufweist.

2. Verfahren nach Anspruch 1, **dadurch gekennzeichnet, dass** die Austrittsöffnung (7) im Deckel (5) angeordnet ist, wobei das Bodengefäß (2) und der Deckel (5) eine im wesentlichen runde Grundform haben und wobei sich die Austrittsöffnung (7) und die Eintrittsöffnung (9) diagonal gegenüberliegen.

3. Verfahren nach Anspruch 2, **dadurch gekennzeichnet, dass** abgesehen von der Eingabe von sauerstoffhaltigem Gas (G) an der diagonal von der Austrittsöffnung (7) angeordneten Eintrittsöffnung (9) keine Eingabe von sauerstoffhaltigem Gas (G) mit einer Geschwindigkeit über 5 m/s erfolgt.

4. Verfahren nach einem der Ansprüche 1 bis 3, **dadurch gekennzeichnet, dass** das Bodengefäß (2) zur Aufnahme von schmelzflüssigem Material bis zu einer maximalen Pegelhöhe (h) ausgebildet ist, wobei die Eintrittsöffnung (9) in einem Bereich (Δh) zwischen 20 und 150 cm oberhalb der maximalen Pegelhöhe (h) angeordnet ist.

5. Verfahren nach einem der Ansprüche 1 bis 4, **dadurch gekennzeichnet, dass** das sauerstoffhaltige Gas (G) über mehrere Eingabeelemente (11) eingegeben wird, die parallel horizontal nebeneinander und/oder in vertikale Richtung übereinander angeordnet sind.

6. Verfahren nach Anspruch 5, **dadurch gekennzeichnet, dass** alle Eingabeelemente (11) am Umfang der Wandung (10) horizontal nebeneinander so angeordnet sind, dass sie einen Umfangsabschnitt von maximal 270° besetzen.

7. Verfahren nach einem der Ansprüche 1 bis 6, **dadurch gekennzeichnet, dass** das mindestens eine Eingabeelement (1) in seinem Austritts-endbereich eine trichterförmige Verbreiterung (13) aufweist.

## Claims

1. Method for operating an electric arc furnace (1), in which molten material (3), in particular steel, which is located in a bottom vessel (2) is heated using at least one arc (4), wherein a cover (5) is arranged on the bottom vessel (2), wherein an outlet opening (7) is arranged at at least one point (6) on the electric arc furnace (1), from which opening furnace exhaust gases can be fed out of the inside of the furnace and conveyed to a dedusting chamber (8), and wherein an oxygen-containing gas (G) is fed into the inside of the furnace for afterburning,
wherein the oxygen-containing gas (G) is fed to an inlet opening (9) which is remote from the outlet opening (7), wherein the oxygen-containing gas (G) is allowed to flow into the inside of the furnace by means of at least one input element (11),
wherein the at least one input element (11) is arranged so as to be radially oriented in the wall (10) of the bottom vessel (2) or wherein the at least one input element (1) is arranged in the wall (10) of the bottom vessel (2) so as to be oriented towards the centre of the furnace,
wherein the outlet direction (S) of the input element (11) encloses an angle (α) of between 5° and 15° to the horizontal in a downward direction,
wherein the oxygen-containing gas (G) is allowed to flow into the inside of the furnace via the at least one input element (11) such that it has an outflow speed (v) of less than 5 m/s,
wherein the oxygen-containing gas (G) is conveyed to the at least one input element (11) via a supply line (12) and the gas (G) in the supply line (12) has an overpressure relative to the pressure in the electric arc furnace (1) of at most 0.5 bar, preferably of at most 0.25 bar, directly before reaching the input element (11).

2. Method according to claim 1, **characterised in that** the outlet opening (7) is made in the cover (5), the bottom vessel (2) and the cover (5) having a substantially round basic shape and the outlet opening (7) and the inlet opening (9) being diagonally opposite each other.

3. Method according to claim 2, **characterised in that**, except for the input of oxygen-containing gas (G) at the inlet opening (9) that is arranged diagonally relative to the outlet opening (7), no oxygen-containing gas (G) is input at a speed of greater than 5 m/s.

4. Method according to any of claims 1 to 3, **characterised in that** the bottom vessel (2) is configured to receive molten material up to a maximum fill level (h), the inlet opening (9) being arranged in a region (Δh) that is between 20 and 150 cm above the maximum fill level (h).

5. Method according to any of claims 1 to 4, **characterised in that** the oxygen-containing gas (G) is input via a plurality of input elements (11) which are arranged so as to be horizontally in parallel beside one another and/or in a vertical direction above one another.

6. Method according to claim 5, **characterised in that** all the input elements (11) are arranged horizontally beside one another over the circumference of the wall (10) such that they occupy a portion of the circumference of at most 270°.

7. Method according to any of claims 1 to 6, **characterised in that** the at least one input element (1) has a funnel-shaped widening (13) in its end outlet region.

## Revendications

1. Procédé pour faire fonctionner un four à arc électrique (1), selon lequel une matière fondue (3), notamment de l'acier, se trouvant dans un récipient bas (2) est chauffée avec au moins un arc électrique (4), un couvercle (5) étant placé sur le récipient bas (2), un orifice de sortie (7) étant agencé en au moins un endroit (6) du four à arc électrique (1), orifice de sortie à partir duquel des fumées de four sont conduites hors de l'intérieur du four jusqu'à une installation de dépoussiérage (8), et un gaz (G) qui contient de l'oxygène étant introduit à l'intérieur du four pour la postcombustion,
l'introduction du gaz (G) qui contient de l'oxygène s'effectuant au niveau d'un orifice d'entrée (9) qui est à une certaine distance de l'orifice de sortie (7), le gaz (G) qui contient de l'oxygène affluant à l'intérieur du four au moyen d'au moins un élément d'entrée (11),
l'au moins un élément d'entrée (11) étant agencé, orienté de façon radiale, dans la paroi (10) du récipient bas (2) ou l'au moins un élément d'entrée (11) étant agencé, orienté en direction du centre du four, dans la paroi (10) du récipient bas (2),
la direction de sortie (S) de l'élément d'entrée (11) formant avec l'horizontale un angle (α) entre 5° et 15° vers le bas,
le gaz (G) qui contient de l'oxygène affluant de telle sorte par l'intermédiaire de l'au moins un élément d'entrée (11) à l'intérieur du four qu'il a une vitesse d'afflux (v) de moins de 5 m/s,
le gaz (G) qui contient de l'oxygène étant amené à l'au moins un élément d'entrée (11) par l'intermédiaire d'une conduite (12) et le gaz (G) présentant dans la conduite (12), juste avant d'atteindre l'élément d'entrée (11), une surpression de 0,5 bar au maximum, de préférence de 0,25 bar au maximum, par rapport à la pression dans le four à arc électrique (1).

2. Procédé selon la revendication 1, **caractérisé en ce que** l'orifice de sortie (7) est agencé dans le couvercle (5), le récipient bas (2) et le couvercle (5) ayant une forme fondamentale globalement ronde et l'orifice de sortie (7) et l'orifice d'entrée (9) étant situés diagonalement à l'opposé l'un de l'autre.

3. Procédé selon la revendication 2, **caractérisé en ce que**, mis à part l'entrée de gaz (G) qui contient de l'oxygène au niveau de l'orifice d'entrée (9) agencé diagonalement à l'opposé de l'orifice de sortie (7), il ne s'effectue aucune entrée de gaz (G) qui contient de l'oxygène avec une vitesse de plus de 5 m/s.

4. Procédé selon l'une des revendications 1 à 3, **caractérisé en ce que** le récipient bas (2) est conçu pour recevoir une matière fondue jusqu'à un niveau maximal (h), l'orifice d'entrée (9) étant agencé dans une zone (Δh) entre 20 et 150 cm au-dessus du niveau maximal (h).

5. Procédé selon l'une des revendications 1 à 4, **caractérisé en ce que** le gaz (G) qui contient de l'oxygène est introduit par l'intermédiaire de plusieurs éléments d'entrée (11) qui sont agencés parallèlement et horizontalement les uns à côté des autres et/ou les uns au-dessus des autres dans la direction verticale.

6. Procédé selon la revendication 5, **caractérisé en ce que** tous les éléments d'entrée (11) sont agencés horizontalement les uns à côté des autres sur la circonférence de la paroi (10) de telle sorte qu'ils occupent une partie de circonférence de 270° au maximum.

7. Procédé selon l'une des revendications 1 à 6, **caractérisé en ce que** l'au moins un élément d'entrée (11) comporte dans sa zone terminale de sortie un élargissement (13) en forme d'entonnoir.
